# EUROPÄISCHE PATENTSCHRIFT

(11) **EP 2 874 393 B1**
(45) Veröffentlichungstag und Bekanntmachung des Hinweises auf die Patenterteilung: **30.06.2021**
(21) Anmeldenummer: 14190830.1
(22) Anmeldetag: 29.10.2014
(51) Int. Cl.: H04N 7/18, B60R 1/00

(54) **Ego-Identifizierung und Mapping eines Fahrzeugmodells**
Ego-identification and mapping of a vehicle model
Identification à l'égo et cartographie d'un modèle de véhicule

(30) Priorität: 31.10.2013 DE 102013222260
(43) Veröffentlichungstag der Anmeldung: 20.05.2015
(73) Patentinhaber: Continental Automotive GmbH, 30165 Hannover (DE)
(72) Erfinder: von Rosenberg, Harald, 78126 Königsfeld (DE); Schröer, Frank, 81476 München (DE); Schmalriede, Tobias, 60321 Frankfurt (DE); Garschke, Thomas, 78250 Tengen (DE)
(74) Vertreter: Continental Corporation

(56) Entgegenhaltungen:
- EP-A2- 1 283 406
- DE-A1-102008 046 545
- None

## Beschreibung

### Gebiet der Erfindung

Die Erfindung betrifft die Assistenz- und Sicherheitstechnik für Fahrzeuge. Insbesondere betrifft die Erfindung ein automatisiertes Kalibrationssystem eines Kamerasystems für ein Fahrzeug, ein Fahrzeug mit einem automatisierten Kalibrationssystem, ein Verfahren zum automatischen Kalibrieren eines Surround-view-Kamerasystems eines Fahrzeugs, ein Programmelement und ein computerlesbares Medium.

### Technologischer Hintergrund

In den Bildern, die von am Fahrzeug angebrachten Kameras erfasst werden, können störende Fahrzeugteile enthalten sein. Um die Bildqualität insbesondere bei Surroundview-Systemen zu erhöhen, können manuelle Kalibrationsverfahren durchgeführt werden. Beispielsweise werden unter Verwendung einer grafischen Oberfläche eines externen Computerprogramms unerwünschte Bildbereiche von einem Benutzer markiert und ausgeblendet. Auch kann das einzublendende, virtuelle Fahrzeugmodell manuell in seiner Größe derart angepasst werden, dass es den dafür vorgesehenen Bildbereich ausfüllt.
Dies ist ein aufwändiger Prozess, der nicht automatisiert durchgeführt werden kann, da Benutzereingaben erforderlich sind.

Aus DE 10 2008 046 545 A1 ist ein Verfahren und eine Vorrichtung zur Kalibrierung einer Anordnung zur Überwachung einer Umgebung eines Fahrzeugs bekannt, wobei die Umgebung anhand von mehreren Bilderfassungseinheiten, deren Erfassungsbereiche sich zumindest teilweise überlappen und einen Überlappungsbereich bilden, erfasst wird. Aus mittels der Bilderfassungseinheiten erfassten Einzelbildern wird anhand einer Bildverarbeitungseinheit ein Gesamtbild erzeugt. Die Bilderfassungseinheiten sollen mittels markanter Punkte und/oder Kanten an dem Fahrzeug kalibriert werden, und zwar indem Positionen und/oder Verläufe dieser markanten Punkte und/oder Kanten in einem aktuellen Bildausschnitt einer jeweiligen Bilderfassungseinheit mit Positionen und/oder Verläufen dieser markanten Punkte und/oder Kanten in einem Modellbild verglichen werden.

### Zusammenfassung der Erfindung

Es ist eine Aufgabe der Erfindung, die Kalibration von Kamerasystemen in Fahrzeugen zu verbessern.

Diese Aufgabe wird durch die Merkmale der unabhängigen Patentansprüche gelöst. Weiterbildungen der Erfindung ergeben sich aus den Unteransprüchen und der folgenden Beschreibung.

Ein erster Aspekt der Erfindung betrifft ein automatisiertes Kalibrationssystem eines Kamerasystems für ein Fahrzeug. Das Kalibrationssystem weist eine Steuereinheit auf, die mit dem Kamerasystem kommunikativ verbindbar ist und ausgeführt ist, eine Identifikation ungewünschter Bildbestandteile in dem aufgenommenen Kamerabild, die sich auf das Fahrzeug zurückführen lassen, während der Fahrt des Fahrzeugs zu identifizieren.

In anderen Worten kann das System die von der Kamera bzw. den Kameras aufgenommenen Bilder auswerten und während der Fahrt des Fahrzeugs feststellen, welche Bildbestandteile des sich ergebenden Gesamtbildes dem eigenen Fahrzeug zuzuordnen sind. Hierbei handelt es sich um Anbauten, Stoßstange, Spiegel oder Antennen.

Gemäß einer Ausführungsform der Erfindung ist die Steuereinheit zur Verwendung der identifizierten Bildbestandteile zum Einfügen eines virtuellen Fahrzeugmodells in das Kamerabild des Kamerasystems ausgeführt.

Stellt die Steuereinheit beispielsweise fest, dass es sich bei einem der Bildbestandteile um eine Antenne handelt, bei einem zweiten Bildbestandteil um den rechten Außenspiegel, bei einem dritten Bildbestandteil um den linken Außenspiegel, usw. Daraufhin kann sie festlegen, wo genau und gegebenenfalls mit welcher Verzerrung das virtuelle Fahrzeugmodell in das Gesamtbild eingefügt werden muss. Es kann hierbei vorgesehen sein, dass die Steuereinheit Kenntnis davon hat, wo diese Elemente am Fahrzeug angeordnet sind.

Gemäß einer weiteren Ausführungsform der Erfindung ist das Kalibrationssystem als Surroundview-Kalibrationssystem ausgeführt.

Gemäß einer weiteren Ausführungsform der Erfindung ist die Steuereinheit zur Verwendung der identifizierten Bildbestandteile zum Bestimmen der Position einer Kamera des Kamerasystems relativ zum Horizont ausgeführt.

Gemäß einer weiteren Ausführungsform der Erfindung ist die Steuereinheit zur Anpassung einer Stitching-Geometrie zur Ausblendung der ungewünschten Bildbestandteile unter Verwendung einer Gütefunktion ausgeführt.

Die Steuereinheit identifiziert Bildbestandteile, welche auf Fahrzeugteile zurückzuführen sind, und stellt fest, ob das Bild einer anderen Kamera verwendet werden kann, um diese störenden Bildbestandteile durch andere, geeignete Bildbestandteile zu ersetzen. So kann es beispielsweise sein, dass die Kamera auf der rechten Seite des Fahrzeugs einen bestimmten Bereich in der Fahrzeugumgebung nicht einsehen kann, da der Seitenspiegel im Weg ist, die Frontkamera diesen Bereich jedoch sehr wohl einsehen kann. In diesem Fall kann der "blinde" Bereich aus dem Bild der Seitenkamera entfernt werden und durch den entsprechenden Bildbereich aus dem Bild der Frontkamera ersetzt werden.

Dieser Schritt kann iterativ durchgeführt werden, wobei bei jeder Iteration festgestellt wird, ob sich das Gesamtbild in seiner Qualität bzgl. Störeinflüssen verbessert hat.

Gemäß einer weiteren Ausführungsform der Erfindung ist die Steuereinheit zur Verwendung der identifizierten Bildbestandteile zum Bestimmen einer optischen Eigenschaft einer oder mehrerer Kameras des Kamerasystems ausgeführt. Beispielsweise kann auf diese Weise die Krümmung des Kamerabildes bzw. dessen Verzerrung in bestimmten Bereichen festgestellt werden, da die Steuereinheit die zum Fahrzeug gehörenden Bildbestandteile identifiziert und ihre tatsächliche Lage relativ zur Kamera kennt. Die Steuereinheit kennt die Position und die Lage der Kameras. Somit können optische Verzerrungen im Bild durch die Kameralinse korrigiert und bestimmte Bildbestandteile entsprechenden Fahrzeugbauteilen zugeordnet werden.

Insbesondere kann das System dadurch feststellen, ob eine Kamera oder beispielsweise ihre Optik ausgetauscht werden muss, da die optischen Eigenschaften der Kamera zu schlecht geworden sind.

Gemäß einer weiteren Ausführungsform der Erfindung ist die Steuereinheit zum Triggern der automatischen Identifikation unerwünschter Bildbestandteile in dem Kamerabild, die sich auf das Fahrzeug zurückführen lassen, ausgeführt, wenn eine Fahrzeugsensorik (beispielsweise ESP-System) des Fahrzeugs während der Fahrt des Fahrzeugs ein Ereignis identifiziert (beispielsweise Stoß oder Schlag auf den Außenspiegel), welches zu einer Änderung der ungewünschten Bildbestandteile führen kann.

Auf diese Weise kann die Qualität des Gesamtbildes immer wieder überprüft und somit optimiert werden.

Gemäß einer weiteren Ausführungsform der Erfindung ist die Steuereinheit zur Verwendung der identifizierten Bildbestandteile zum Bestimmen einer Länge und einer Breite des virtuellen Fahrzeugmodells in dem Kamerabild ausgeführt. In anderen Worten können die identifizierten Bildbestandteile dazu dienen, genau festzulegen, wo und mit welcher Verzerrung das virtuelle Fahrzeugmodell in das Gesamtbild eingefügt werden soll.

Gemäß einem weiteren Aspekt der Erfindung ist ein Fahrzeug mit einem oben und im Folgenden beschriebenen Kalibrationssystem angegeben.

Gemäß einem weiteren Aspekt der Erfindung ist ein Verfahren zum automatischen Kalibrieren eines Surroundview-Kamerasystems eines Fahrzeugs angegeben, bei dem ungewünschte Bildbestandteile in dem Kamerabild des Surroundview-Kamerasystems identifiziert werden, wobei sich diese Bildbestandteile auf das eigene Fahrzeug zurückführen lassen. Die Identifikation der ungewünschten Bildbestandteile erfolgt während der Fahrt des Fahrzeugs. Es kann vorgesehen sein, dass dieser Schritt durch externe Ereignisse getriggert wird.

Gemäß einem weiteren Aspekt der Erfindung ist ein Programmelement angegeben, das, wenn es auf einer Steuereinheit eines Kalibrationssystems eines Surroundview-Kamerasystems eines Fahrzeugs ausgeführt wird, die Steuereinheit anweist, die oben und im Folgenden beschriebenen Verfahrensschritte durchzuführen.

Gemäß einem weiteren Aspekt der Erfindung ist ein computerlesbares Medium angegeben, auf dem ein derartiges Programmelement gespeichert ist.

Dabei kann das Programmelement Teil einer Software sein, die auf der Steuereinheit eines Fahrzeugsystems gespeichert ist. Weiterhin umfasst dieses Ausführungsbeispiel der Erfindung ein Programmelement, welches von Anfang an die Erfindung verwendet, sowie auch ein Programmelement, welches durch eine Aktualisierung (Update) ein bestehendes Programm zur Verwendung der Erfindung veranlasst.

In diesem Zusammenhang sei darauf hingewiesen, dass die oben und im Folgenden beschriebenen Eigenschaften des Kalibrationssystems als Verfahrensschritte in dem Verfahren umgesetzt werden können.

Weiterhin kann das erfindungsgemäße Kalibrationssystem ausgeführt sein, sämtliche oder ausgewählte der oben und im Folgenden beschriebenen Verfahrensschritte durchzuführen.

Im Folgenden werden mit Verweis auf die Figuren Ausführungsbeispiele der Erfindung beschrieben.

### Kurze Beschreibung der Figuren

Fig. 1 zeigt ein Fahrzeug mit einem Kalibrationssystem gemäß einem Ausführungsbeispiel der Erfindung.
Fig. 2 zeigt ein Kamerasystem mit einem Kalibrationssystem gemäß einem Ausführungsbeispiel der Erfindung.
Fig. 3 zeigt ein Bild, das von einer Kamera eines Kamerasystems aufgezeichnet und danach gemäß einem Ausführungsbeispiel der Erfindung bearbeitet wird.
Fig. 4 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

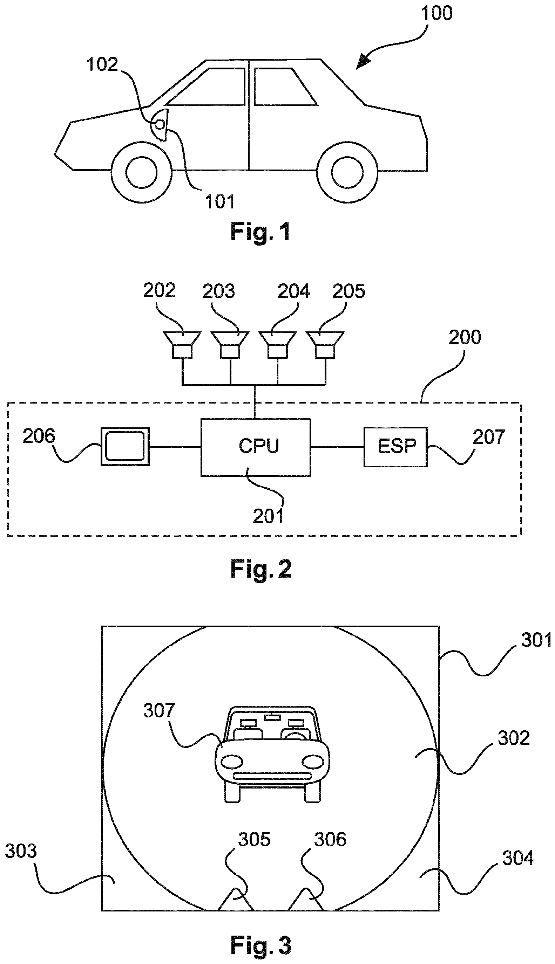

Fig. 1 zeigt ein Fahrzeug 100, welches ein Kamerasystem mit einem automatisierten Kalibrationssystem aufweist. Die unterschiedlichen Kameras des Kamerasystems sind um das Fahrzeug herum verteilt angeordnet. In der Fig. 1 ist beispielsweise die Kamera 102 zu erkennen, die am linken Außenspiegel 101 angeordnet ist.

Die Kameras können im Frontbereich des Fahrzeugs, im Heckbereich des Fahrzeugs, auf der linken Seite und auf der rechten Seite des Fahrzeugs angeordnet sein. Beispielsweise können hierfür vier Kameras vorgesehen sein. Die Kameras können darüber hinaus alternativ oder zusätzlich an den Ecken des Fahrzeugs angeordnet sein. Insbesondere können auch mehr als vier Kameras vorgesehen sein.

Jede der Kameras erzeugt ein Bild von einem bestimmten Bereich der Umgebung des Fahrzeugs, welches dann beispielsweise auf eine horizontale Ebene projiziert wird. Die Kameraeinzelbilder können dann durch sog. Stitching zusammengeführt und miteinander verbunden werden, um ein Gesamtbild zu erzeugen.

Fig. 2 zeigt ein Kamerasystem mit vier Einzelkameras 202, 203, 204, 205, welches an ein automatisiertes Kalibrationssystem 200 angeschlossen ist. Das automatisierte Kalibrationssystem 200 weist eine Steuereinheit 201 auf, die mit dem Kamerasystem verbunden ist. An die Steuereinheit ist darüber hinaus ein Fahrerassistenzsystem 207, welches beispielsweise ein ESP-System aufweist, angeschlossen. Darüber hinaus ist die Steuereinheit 201 mit einer Darstellungseinheit 206 in Form eines Displays verbunden, welche dem Fahrer das vom Kamerasystem erzeugte Gesamtbild darstellen kann.

Fig. 3 zeigt ein Beispiel für ein mit einer der Kameras aufgenommenes Einzelbild 302, welches von einer Anzeigeeinrichtung 301 dargestellt wird. Die Kamera weist ein fischaugenartiges Objektiv auf, so dass sie einen großen Blickwinkel hat. Das von der Kamera aufgenommene Bild 302 ist aus diesem Grunde jedoch verzerrt. Diese Verzerrung kann jedoch von der Steuereinheit ausgerechnet werden.

Das Kamerabild 302 zeigt ein hinter dem eigenen Fahrzeug, in dem das Kamerasystem installiert ist, stehendes Fahrzeug 307. Darüber hinaus sind im unteren Bereich des Bildes Bildbestandteile 303, 304, 305, 306 zu sehen, welche auf die Stoßstange bzw. den Heckbereich des eigenen Fahrzeugs zurückzuführen sind, da die Kamera auch diesen Bereich mit erfasst.

Diese Bildbestandteile können von der Steuereinheit identifiziert werden. Da die Steuereinheit die tatsächliche Position dieser Fahrzeugbestandteile relativ zur Kamera kennt, kann die so gewonnene Information verwendet werden, das virtuelle Fahrzeugmodell möglichst korrekt in das projizierte Gesamtbild einzufügen. Das Einpassen oder Einfügen des virtuellen Fahrzeugmodells in das Gesamtbild kann auch vor dessen Projektion auf die horizontale Bildebene erfolgen. Das virtuelle Fahrzeugmodell muss hierfür nicht verzerrt werden.

Insbesondere ist es möglich, dass dieser Prozess iterativ erfolgt, bis die Qualität des projizierten Gesamtbilds optimiert ist. Da es möglich ist, dass sich die Lage, die Form und/oder die optischen Eigenschaften der von den Kameras ausgenommenen Fahrzeugteile (ggf. zusammen mit daran anhaftenden Verunreinigungen, Schnee, etc.) während der Fahrt des Fahrzeugs ändert, beispielsweise weil ein Außenspiegel verschwenkt wird oder weil Schnee vom Außenspiegel oder der Stoßstange abfällt, kann das Kalibrationsverfahren zu mehreren Zeitpunkten während der Fahrt durchgeführt werden.

Das automatisierte Kalibrationsverfahren kann insbesondere für das Stitching der Kamerabilder eines Surroundview-Kamerasystems eines Fahrzeugs eingesetzt werden und löst dabei mehrere Probleme. Nachdem durch optische oder andere technische Verfahren und Einrichtungen ein korrektes Stitching der Einzelkamerabilder zu einer Gesamt-Surroundview-Ansicht erzielt werden konnte, können Teile des Fahrzeugs (Anbauten, Stoßstange, Spiegel, Antennen, ...) identifiziert werden, die in der zusammengesetzten Ansicht der Surroundview sichtbar sind, jedoch unerwünscht. Darüber hinaus kann eine Transformation und Anpassung der zusammengesetzten Kameraansicht bzw. eine Transformation und Anpassung des virtuellen Fahrzeugmodells zur Überlagerung und Anzeige in der Surroundview-Ansicht erfolgen, so dass die Fahrzeuggröße und Außenkanten des virtuellen Fahrzeugmodells mit dem Außenumriss des Kamera-basierten Außenumrisses deckungsgleich sind.

Die Erfindung sieht vor, dass die Identifikation von Teilen des eigenen Fahrzeugs durch eine Bildverarbeitung auf dem zugehörigen Kameravideodatenstrom durchgeführt wird: Bewegt sich ein mit einem Surroundview-Kamerasystem ausgestattetes Fahrzeug durch den Straßenverkehr, so unterliegen Bildbereiche, die der Umgebung zugeordnet werden können (beispielsweise Straßenrand, Fahrbahn mit Fahrbahnmarkierungen), starken und hochfrequenten Änderungen, wohingegen Bildbereiche, die dem eigenen Fahrzeug zugeordnet werden können, sich wesentlich langsamer im Bild verändern oder als quasi-statisch erscheinen.

Hauptsächlich sind Defekte durch unterschiedliche Beleuchtung oder Schattenwirkung zu erwarten, die die eigenen Fahrzeugteile im Kamerabild unterschiedlich erscheinen lassen. Bei Fahrzeugen mit Klappen, spiegelnden Außenflächen und/oder lackierten Fahrzeugteilen kann ferner eine Spiegelung der Umgebung an den eigenen Fahrzeugteilen stattfinden, die dann im Kamerabild sichtbar ist.

Das Kalibrationssystem kann ausgeführt sein, eine gerade Fahrzeugkante im Kamerabild zu identifizieren. Da das System die Position und beide Neigungswinkel jeder Kamera bezüglich dem Horizont, die optischen Eigenschaften der Kamera und insbesondere die optische Abbildungsfunktion der Linse und die Fahrzeuglänge und die Fahrzeugbreite durch Meta-Daten aus dem virtuellen Fahrzeugmodell kennt, reichen hierfür zwei Stützstellen je Kamerabild. Diese Stützstellen können beispielsweise Reifen oder Schutzbleche oder sonstige räumlich wohldefiniert und unveränderliche Objekte sein, welche an dem Fahrzeug angebracht sind, wodurch Störungen im restlichen Kamerabild (z. B. der Spiegelungen) nicht weiter relevant sind.

Die Steuereinheit weist eine Erkennungslogik auf, die insbesondere während der Fahrt des Fahrzeugs aktiv ist und diejenigen Teile des eigenen Fahrzeugs erkennt, die im Kamerabild zu sehen sind. Daraufhin werden diese Bildbestandteile separiert.

Der nachfolgende Schritt baut auf der Separation der störenden Bildbestandteile auf: Das zusammengefügte Surroundview-Bild des Fahrzeugs kann nun, da die wahren Außenkanten des Fahrzeugs Bild-basiert identifiziert sind, dermaßen einer Transformation (Translation, Zerrung, Stauchung in vertikaler und horizontaler Richtung, Rotation und/oder Scherung, falls die identifizierten Fahrzeugkanten im Surroundview-Bild nicht parallel und rechtwinklig sind bzw. ein genereller Versatz im Gierwinkel bestimmt wird) unterzogen werden, so dass eine Deckungsgleichheit zwischen dem virtuellen Fahrzeugmodell und dem freigestellten/ausgestanzten/separierten Kamera-Surroundview-Bild für das virtuelle Fahrzeugmodell erzielt wird. Somit kann sichergestellt werden, dass eine bestimmte, wohldefinierte Größe der Fahrzeugrepräsentation auf einer Anzeigeeinrichtung 306 für ein Surroundview-System eingehalten wird.

Ein dritter Schritt sieht das automatische Erkennen und Ausblenden von störenden Objekten im Surroundview-Bild vor: Insbesondere Spiegel und andere, weit abstehende Anbauten an Nutzfahrzeugen können im zusammengesetzten Surroundview-Bild unerwünscht sichtbar sein.

Häufig können diese Objekte durch eine Veränderung der Stitching-Geometrie ausgeblendet werden. Hierbei wird dynamisch ermittelt und festgelegt, welcher Bildbereich im zusammengefügten Surround-Bild von einer Front-, Heck- oder Seitenkamera stammt. Dadurch, dass folgende Größen und Werte bekannt oder bestimmbar sind, kann nun automatisch die Gewichtung und geometrische Verteilung der anteiligen Einzelkamerabilder am Gesamt-Surround-Bild gezielt angepasst werden, so dass diese Objekte bestmöglich ausgeblendet werden.

Bei den hierfür verwendeten bekannten oder bestimmbaren Größen und Werten handelt es sich beispielsweise um die Kamerapositionen und bei die Neigungswinkel der Kameras bezüglich dem Horizont, den optischen Eigenschaften der Kameras und insbesondere den optischen Abbildungsfunktionen der Linsen der Kameras, sowie die Fahrzeuglänge und Fahrzeugbreite, die aus Meta-Daten des speziellen Fahrzeugmodells bekannt sind.

Als Gütekriterium ist hierbei vorgesehen, dass der Ähnlichkeitsvergleich der Kamerabilder auf das Surroundview-Bild ebenfalls angewendet wird und verlangt wird, dass sich das gesamte Umgebungsbild größtmöglich bei Fahrt zu unterschiedlichen Zeitpunkten unterscheiden soll, wobei dadurch dann ein Optimum im automatischen Ausblenden von Störobjekten, wie Spiegel, etc., erzielt wird.

Die Kameras eines Vier-Kamerasystems werden somit nicht nur für die grafische und optische Visualisierung der Fahrzeugumgebung sowie für eine optische Kalibration des Kamera-Stitchings verwendet, sondern sind auch die Grundlage für eine automatisierte Bildanalyse. Diese Bildanalyse bildet einen notwendigen Baustein bei einer vollständig automatischen Kalibration und Systemeinrichtung eines Surroundview-Systems. Auch eine teil-manuelle Einrichtung und Kalibration kann durch die hier beschriebenen Verfahren automatisch verfeinert werden, wodurch der Komfortgewinn für den Anwender steigt.

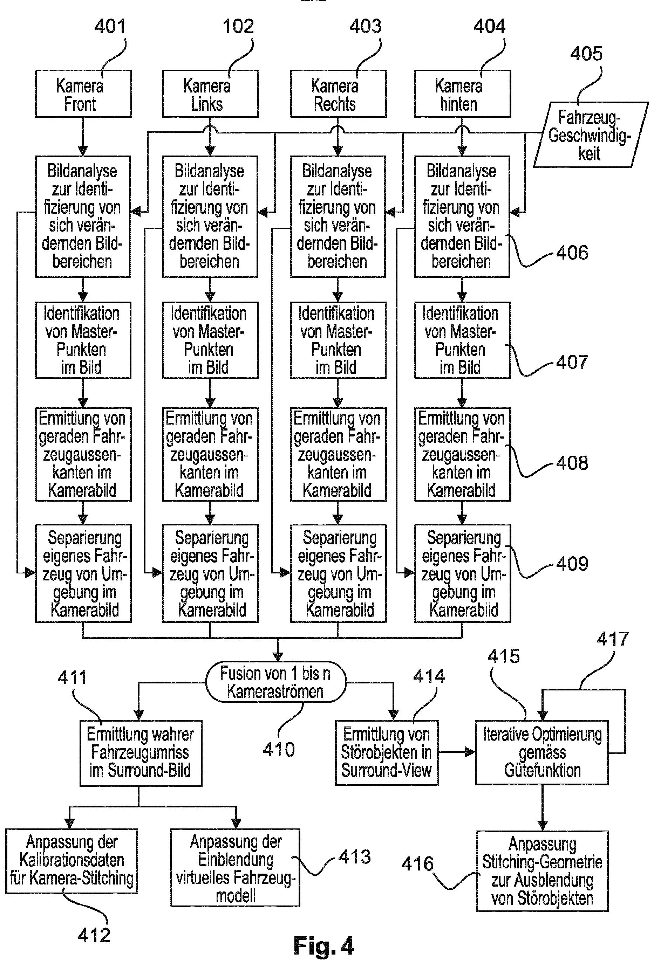

Fig. 4 zeigt ein Flussdiagramm eines Verfahrens gemäß einem Ausführungsbeispiel der Erfindung. Das System ist skalierbar ausgelegt, so dass auch mehr oder weniger als vier Kameras verarbeitet und ausgewertet werden können.

In Schritt 401 erfasst die Frontkamera des Fahrzeugs ein Bild. Zur selben Zeit erfasst die Kamera, die an der linken Seite des Fahrzeugs angebracht ist, die Kamera, die an der rechten Seite des Fahrzeugs angebracht ist, sowie die Kamera, die auf der Rückseite des Fahrzeugs angebracht ist, ebenfalls jeweils ein Bild (vgl. Schritte 102, 403, 404).

Diese vier Einzelbilder werden in Schritt 406 der Steuereinheit zugeführt, welche eine Bildanalyse zur Identifizierung von sich verändernden Bildbereichen vornimmt. Hilfreich hierfür kann es sein, wenn die aktuelle Fahrzeuggeschwindigkeit in Schritt 405 gemessen wird und das Messergebnis ebenfalls zur Bildanalyse an die Steuereinheit übergeben wird. Die Fahrzeuggeschwindigkeit kann auch durch eine Analyse der Kamerabilder berechnet werden. Weitere Fahrzeugsensorik zur Geschwindigkeitsbestimmung ist in diesem Fall nicht notwendig.

Die störenden Bildbereiche, die dem eigenen Fahrzeug zuzuordnen sind, können dann in Schritt 409 von der Umgebung im Kamerabild separiert werden. Bevor dies geschieht, kann vorgesehen sein, dass zunächst eine Identifikation von Master-Punkten im Bild durchgeführt wird (Schritt 407) und dass in Schritt 408 die geraden Fahrzeugaußenkanten im Kamerabild ermittelt werden. Diese Kenntnisse können bei der Separierung der störenden Bildbestandteile, die dem eigenen Fahrzeug zuzuordnen sind, helfen und in diesen Prozess einfließen.

Nach der Separierung kann dann die sog. Fusion der vier (allgemein 1 bis n) Kameraströme in Schritt 410 erfolgen. Dieser Vorgang wird auch als Stitching bezeichnet.

Das Kalibrationssystem kann nun zwei Verfahren durchführen.

Zum einen kann es in Schritt 411 den wahren Fahrzeugumriss im Surroundview-Bild ermitteln, indem hierfür die Positionen und Formen der separierten Bildbestandteile herangezogen werden. Daraufhin kann in Schritt 412 eine Anpassung der Kalibrationsdaten für das Kamera-Stitching erfolgen und parallel dazu kann in Schritt 413 eine Anpassung der Einblendung des virtuellen Fahrzeugmodells durchgeführt werden.

Das andere Verfahren sieht in Schritt 414 die Ermittlung von Störobjekten im Surround-View-Bild vor, welche zur iterativen Optimierung gemäß einer Gütefunktion in Schritt 415 herangezogen werden können. Der Pfeil 417 symbolisiert, dass der Schritt 415 mehrmals iterativ durchgeführt werden kann, bis die Qualität des Gesamtbildes optimiert ist. In Schritt 416 kann dann die Stitching-Geometrie zur Ausblendung der Störobjekte angepasst werden.

Das kann beispielsweise dadurch erfolgen, dass Bildbereiche, die von einer Kamera schlecht eingesehen werden können, durch Bilddaten, die von einer anderen Kamera erfasst wurden, ersetzt werden.

## Patentansprüche

1. Automatisiertes Kalibrationssystem (200) eines Kamerasystems (202, 203, 204, 205) für ein Fahrzeug (100), wobei das Kamerasystem unterschiedliche, um das Fahrzeug (100) herum verteilt angeordnete Kameras aufweist und wobei jede der Kameras ein Bild von einem bestimmten Bereich der Umgebung des Fahrzeugs erzeugt, welches dann auf eine horizontale Ebene projiziert wird, aufweisend:
eine Steuereinheit (201), die mit dem Kamerasystem kommunikativ verbindbar ist und ausgeführt ist, die folgenden Schritte durchzuführen:
Identifikation ungewünschter Bildbestandteile, die sich auf das Fahrzeug zurückführen lassen und bei welchen es sich um Anbauten, Stoßstange, Spiegel oder Antennen handelt, in einem aufgenommenen Kamerabild während der Fahrt des Fahrzeugs;
Feststellen, ob ein Bild einer anderen Kamera verwendet werden kann, um die ungewünschten Bildbestandteile durch andere Bildbestandteile zu ersetzen;
Ersetzen der ungewünschten Bildbestandteile durch die anderen Bildbestandteile.

2. Kalibrationssystem (200) nach Anspruch 1,
ausgeführt als Surroundview-Kalibrationssystem.

3. Kalibrationssystem (200) nach einem der vorhergehenden Ansprüche,
wobei die Steuereinheit (201) zur Verwendung der identifizierten Bildbestandteile zum Einfügen eines virtuellen Fahrzeugmodells in ein Kamerabild des Kamerasystems ausgeführt ist.

4. Kalibrationssystem (200) nach einem der vorhergehenden Ansprüche,
wobei die Steuereinheit (201)zur Verwendung der identifizierten Bildbestandteile zum Bestimmen der Position einer Kamera (202) des Kamerasystems (202, 203, 204, 205) relativ zum Horizont ausgeführt ist.

5. Kalibrationssystem (200) nach einem der vorhergehenden Ansprüche,
wobei die Steuereinheit (201) zur Verwendung der identifizierten Bildbestandteile zum Bestimmen einer optischen Eigenschaft einer Kamera (202) des Kamerasystems (202, 203, 204, 205)ausgeführt ist.

6. Kalibrationssystem (200) nach einem der Ansprüche 2 bis 4,
wobei die Steuereinheit (201)zur Anpassung einer Stitching-Geometrie zur Ausblendung der ungewünschten Bildbestandteile unter Verwendung einer Gütefunktion ausgeführt ist.

7. Fahrzeug (100) mit einem Kalibrationssystem (200) nach einem der Ansprüche 1 bis 6.

8. Verfahren zum automatisierten Kalibrieren eines Surroundview-Kamerasystems (200, 202, 203, 204, 205) eines Fahrzeugs (100), wobei das Kamerasystem unterschiedliche, um das Fahrzeug (100) herum verteilt angeordnete Kameras aufweist und wobei jede der Kameras ein Bild von einem bestimmten Bereich der Umgebung des Fahrzeugs erzeugt, welches dann auf eine horizontale Ebene projiziert wird, das Verfahren aufweisend die Schritte:
Identifizieren ungewünschter Bildbestandteile, die sich auf das Fahrzeug zurückführen lassen und bei welchen es sich um Anbauten, Stoßstange, Spiegel oder Antennen handelt, in einem aufgenommenen Kamerabild des Surround-view-Kamerasystems während der Fahrt des Fahrzeugs;
Feststellen, ob ein Bild einer anderen Kamera verwendet werden kann, um die ungewünschten Bildbestandteile durch andere Bildbestandteile zu ersetzen;
Ersetzen der ungewünschten Bildbestandteile durch die anderen Bildbestandteile.

9. Programmelement, das, wenn es auf einer Steuereinheit eines Kalibrationssystems (200)eines Surroundview-Kamerasystems (200, 202, 203, 204, 205) eines Fahrzeugs (100), wobei das Kamerasystem unterschiedliche, um das Fahrzeug (100) herum verteilt angeordnete Kameras aufweist und wobei jede der Kameras ein Bild von einem bestimmten Bereich der Umgebung des Fahrzeugs erzeugt, welches dann auf eine horizontale Ebene projiziert wird, ausgeführt wird, die Steuereinheit (201) anweist, die folgenden Schritte durchzuführen:
Identifizieren ungewünschter Bildbestandteile, die sich auf das Fahrzeug zurückführen lassen und bei welchen es sich um Anbauten, Stoßstange, Spiegel oder Antennen handelt, in einem aufgenommenen Kamerabild des Surround-view-Kamerasystems während der Fahrt des Fahrzeugs;
Feststellen, ob ein Bild einer anderen Kamera verwendet werden kann, um die ungewünschten Bildbestandteile durch andere Bildbestandteile zu ersetzen;
Ersetzen der ungewünschten Bildbestandteile durch die anderen Bildbestandteile.

10. Computerlesbares Medium, auf dem ein Programmelement nach Anspruch 9 gespeichert ist.

## Claims

1. Automated calibration system (200) of a camera system (202, 203, 204, 205) for a vehicle (100), wherein the camera system has different cameras arranged distributed around the vehicle (100) and wherein each of the cameras generates an image of a specific region of the surrounding area of the vehicle, which image is then projected onto a horizontal plane, having:
a control unit (201), which is communicatively connectable to the camera system and is embodied to perform the following steps:
identifying undesirable image parts, which are associated with the vehicle and which are additions, bumper, mirror or antennas, in a recorded camera image while the vehicle is driving;
ascertaining whether an image of another camera can be used to replace the undesirable image parts with other image parts;
replacing the undesirable image parts with the other image parts.

2. Calibration system (200) according to Claim 1, embodied in the form of a surround-view calibration system.

3. Calibration system (200) according to either of the preceding claims,
wherein the control unit (201) is embodied for using the identified image parts for insertion of a virtual vehicle model into a camera image of the camera system.

4. Calibration system (200) according to one of the preceding claims,
wherein the control unit (201) is embodied for using the identified image parts for the determination of the position of the camera (202) of the camera system (202, 203, 204, 205) relative to the horizon.

5. Calibration system (200) according to one of the preceding claims,
wherein the control unit (201) is embodied for using the identified image parts for the determination of an optical property of a camera (202) of the camera system (202, 203, 204, 205).

6. Calibration system (200) according to one of Claims 2 to 4, wherein the control unit (201) is embodied for adapting a stitching geometry for masking the undesirable image parts using a power function.

7. Vehicle (100) having a calibration system (200) according to one of Claims 1 to 6.

8. Method for automatically calibrating a surround-view camera system (200, 202, 203, 204, 205) of a vehicle (100), wherein the camera system has different cameras arranged distributed around the vehicle (100) and wherein each of the cameras generates an image of a specific region of the surrounding area of the vehicle, which image is then projected onto a horizontal plane, the method having the steps of:
identifying undesirable image parts, which are associated with the vehicle and which are additions, bumper, mirror or antennas, in a recorded camera image of the surround-view camera system while the vehicle is driving;
ascertaining whether an image of another camera can be used to replace the undesirable image parts with other image parts;
replacing the undesirable image parts with the other image parts.

9. Program element which, when it is executed on a control unit of a calibration system (200) of a surround-view camera system (200, 202, 203, 204, 205) of a vehicle (100), wherein the camera system has different cameras arranged distributed around the vehicle (100) and wherein each of the cameras generates an image of a specific region of the surrounding area of the vehicle, which image is then projected onto a horizontal plane, instructs the control unit (201) to perform the following steps:
identifying undesirable image parts, which are associated with the vehicle and which are additions, bumper, mirror or antennas, in a recorded camera image of the surround-view camera system while the vehicle is driving;
ascertaining whether an image of another camera can be used to replace the undesirable image parts with other image parts;
replacing the undesirable image parts with the other image parts.

10. Computer-readable medium, on which a program element according to Claim 9 is stored.

## Revendications

1. Système de calibrage automatisé (200) d'un système de caméras (202, 203, 204, 205) pour un véhicule (100), le système de caméras présentant différentes caméras réparties autour du véhicule (100), et chacune des caméras produisant une image d'une zone déterminée de l'environnement du véhicule qui est ensuite projetée sur un plan horizontal, présentant :
une unité de commande (201) qui peut être reliée en communication au système de caméras et qui est réalisée pour effectuer les étapes suivantes consistant à :
identifier des composants d'image indésirables qui sont dus au véhicule et qui sont des superstructures, des pare-chocs, des miroirs ou des antennes, sur une image de caméra enregistrée pendant le déplacement du véhicule ;
constater si une image d'une autre caméra peut être utilisée pour remplacer les composants d'image indésirables par d'autres composants d'image ;
remplacer les composants d'image indésirables par les autres composants d'image.

2. Système de calibrage (200) selon la revendication 1, réalisé sous la forme d'un système de calibrage à vue panoramique.

3. Système de calibrage (200) selon l'une quelconque des revendications précédentes, dans lequel l'unité de commande (201) est réalisée pour utiliser les composants d'image identifiés pour l'insertion d'un modèle de véhicule virtuel sur une image de caméra du système de caméras.

4. Système de calibrage (200) selon l'une quelconque des revendications précédentes, dans lequel l'unité de commande (201) est réalisée pour utiliser les composants d'image identifiés pour déterminer la position d'une caméra (202) du système de caméras (202, 203, 204, 205) par rapport à l'horizon.

5. Système de calibrage (200) selon l'une quelconque des revendications précédentes, dans lequel l'unité de commande (201) est réalisée pour utiliser les composants d'image identifiés pour déterminer une propriété optique d'une caméra (202) du système de caméras (202, 203, 204, 205).

6. Système de calibrage (200) selon l'une quelconque des revendications 2 à 4, dans lequel l'unité de commande (201) est réalisée pour adapter une géométrie d'assemblage pour supprimer les composants d'image indésirables en utilisant une fonction de qualité.

7. Véhicule (100) comprenant un système de calibrage (200) selon l'une quelconque des revendications 1 à 6.

8. Procédé de calibrage automatisé d'un système de caméras panoramique (200, 202, 203, 204, 205) d'un véhicule (100), le système de caméras présentant différentes caméras réparties autour du véhicule (100), et chacune des caméras produisant une image d'une zone déterminée de l'environnement du véhicule qui est ensuite projetée sur un plan horizontal, le procédé présentant les étapes consistant à :
identifier des composants d'image indésirables qui sont dus au véhicule et qui sont des superstructures, des pare-chocs, des miroirs ou des antennes, sur une image de caméra enregistrée pendant le déplacement du véhicule ;
constater si une image d'une autre caméra peut être utilisée pour remplacer les composants d'image indésirables par d'autres composants d'image ;
remplacer les composants d'image indésirables par les autres composants d'image.

9. Elément de programme, qui, lorsqu'il est exécuté sur une unité de commande d'un système de calibrage (200) d'un système de caméras panoramique (200, 202, 203, 204, 205) d'un véhicule (100), le système de caméras présentant différentes caméras réparties autour du véhicule (100), et chacune des caméras produisant une image d'une zone déterminée de l'environnement du véhicule qui est ensuite projetée sur un plan horizontal, ordonne à l'unité de commande (201) d'exécuter les étapes suivantes consistant à :
identifier des composants d'image indésirables qui sont dus au véhicule et qui sont des superstructures, des pare-chocs, des miroirs ou des antennes, sur une image de caméra prise pendant le déplacement du véhicule ;
constater si une image d'une autre caméra peut être utilisée pour remplacer les composants d'image indésirables par d'autres composants d'image ;
remplacer les composants d'image indésirables par les autres composants d'image.

10. Support lisible par ordinateur sur lequel est stocké un élément de programme selon la revendication 9.
